(19) Europäisches Patentamt
European Patent Office
Office européen des brevets

(11) **EP 2 476 153 B1**

(12) **FASCICULE DE BREVET EUROPEEN**

(45) Date de publication et mention de la délivrance du brevet:
**11.04.2018 Bulletin 2018/15**

(21) Numéro de dépôt: **10770541.0**

(22) Date de dépôt: **08.09.2010**

(51) Int Cl.:
*H01M 4/04* *(2006.01)*    *H01M 4/136* *(2010.01)*
*H01M 4/1397* *(2010.01)*

(86) Numéro de dépôt international:
**PCT/FR2010/051871**

(87) Numéro de publication internationale:
**WO 2011/030058 (17.03.2011 Gazette 2011/11)**

(54) **PROCEDE DE PREPARATION D'UN MATERIAU POUR ELECTRODE POSITIVE PAR EXTRUSION EN PRESENCE D'UN SOLVANT AQUEUX, ELECTRODE POSITIVE OBTENUE PAR LE PROCEDE ET APPLICATIONS**

VERFAHREN FÜR DIE HERSTELLUNG EINES POSITIVELEKTRODENMATERIALS MITTELS EXTRUSION IN GEGENWART EINES WÄSSRIGEN LÖSUNGSMITTELS, ANHAND DIESES VERFAHRENS GEWONNENE POSITIVE ELEKTRODE UND VERWENDUNG

METHOD FOR PREPARING A POSITIVE ELECTRODE MATERIAL THROUGH EXTRUSION IN PRESENCE OF AN AQUEOUS SOLVENT, POSITIVE ELECTRODE OBTAINED THROUGH SAID METHOD, AND USES THEREOF

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **09.09.2009 FR 0956168**

(43) Date de publication de la demande:
**18.07.2012 Bulletin 2012/29**

(73) Titulaire: **Blue Solutions**
**29500 Ergué Gabéric (FR)**

(72) Inventeurs:
• **MADRAY, Sophie**
**F-29000 Quimper (FR)**

• **DESCHAMPS, Marc**
**F-29000 Quimper (FR)**
• **KERDRANVAT, Stéphane**
**F-29000 Quimper (FR)**

(74) Mandataire: **Goulard, Sophie et al**
**Ipsilon**
**Le Centralis**
**63, avenue du Général Leclerc**
**92340 Bourg-la-Reine (FR)**

(56) Documents cités:
**WO-A2-03/075375      US-A1- 2003 205 835**
**US-A1- 2004 188 880      US-A1- 2006 166 093**

**Description**

La présente invention est relative à un procédé de préparation d'un matériau composite pour électrode positive à base de phosphate de fer, en particulier à base de LiFePO$_4$, par extrusion, en présence d'eau ou d'un mélange d'eau et d'au moins un solvant hydromiscible, à l'électrode positive obtenue en mettant en oeuvre ce procédé et à ses applications.

Elle s'applique au domaine de la fabrication des batteries Lithium Métal Polymère (LMP). Ce type de batterie se présente sous forme d'un assemblage de films minces enroulés (enroulement du motif suivant {électrolyte / cathode / collecteur / cathode / électrolyte / lithium} sur n tours ou de n films minces empilés (coupés et superposés, soit n empilements du motif pré-cité). Ce motif unitaire empilé / complexé a une épaisseur de l'ordre d'une centaine de micromètres. 4 feuilles fonctionnelles entrent dans sa composition : i) une électrode négative (anode) généralement constituée d'une feuille de lithium métallique ou d'un alliage de lithium, ii) un électrolyte composé d'un polymère (généralement du polyoxyéthylène (POE)) et de sels de lithium, iii) une électrode positive (cathode) composée d'un matériau actif d'électrode à base d'oxyde de métal (comme par exemple V$_2$O$_5$, LiV$_3$O$_8$, LiCoO$_2$, LiNiO$_2$, LiMn$_2$O$_4$ et LiNi$_{0.5}$Mn$_{0.5}$O$_{2...}$) ou à base de phosphate de type LiMPO$_4$ où M représente un cation métal sélectionné parmi le groupe Fe, Mn, Co, Ni et Ti, ou de combinaisons de ces cations, comme par exemple LiFePO$_4$, de carbone et de polymère, et enfin iv) un collecteur de courant généralement constitué d'une feuille de métal et permettant d'assurer la connexion électrique.

Les procédés de préparation de films fins de cathode pour batteries de type lithium consistent généralement à mélanger le matériau actif d'électrode, qui est habituellement sous forme pulvérulente, avec un matériau conducteur de l'électricité, tel que des particules de carbone ou de graphite ou un mélange des deux, et un liant polymère dans un solvant organique sous la forme d'une pâte homogène. Cette pâte est ensuite appliquée sur un collecteur de courant sous la forme d'un film fin puis le solvant organique est évaporé par chauffage. Le film d'électrode obtenu par ces procédés est généralement poreux et ne contient pas d'électrolyte. Ce film fin de cathode est ensuite assemblé avec les autres éléments de la batterie puis l'ensemble est saturé avec un électrolyte liquide conducteur ionique comprenant un sel de lithium. Le film poreux constituant la cathode est alors rempli par l'électrolyte afin de permettre les échanges ioniques entre la cathode et l'anode.

D'autres procédés de préparation de films fins de matériau d'électrodes positives pour batteries solides au lithium (LMP) mettent en oeuvre un mélange incorporant un électrolyte constitué d'un polymère solvatant et d'un sel de lithium. Le mélange comprend le matériau actif d'électrode sous forme de particules, le matériau conducteur électronique, le polymère solvatant et le sel de lithium mélangé à un solvant organique sous la forme d'une pâte homogène pour électrode. Cette pâte est ensuite appliquée sur un collecteur de courant sous la forme d'un film ou d'un film fin, puis le solvant organique est évaporé par chauffage afin de former l'électrode. L'électrode positive ainsi obtenue présente une faible porosité dans la mesure où l'électrolyte est introduit initialement dans le matériau d'électrode avant l'évaporation du solvant et remplit les espaces existant entre les particules de matériau actif d'électrode. Ce film d'électrode positive est ensuite assemblé avec un séparateur solide conducteur ionique (électrolyte polymère) et une contre électrode négative pour former la batterie solide au lithium.

Dans les deux cas, des solvants organiques sont utilisés pour diminuer la viscosité du mélange utilisé pour fabriquer la cathode et permettre l'application de la pâte d'électrode sous la forme d'un film fin sur le collecteur de courant. Les solvants organiques doivent ensuite être éliminés, le plus souvent par évaporation après chauffage, avant l'assemblage des différents composants de la batterie. Lorsque ce type d'électrode est fabriqué en quantité industrielle, ou par un procédé en continu, les solvants organiques évaporés doivent être récupérés de façon à ne pas polluer l'environnement. Les procédés de récupération des solvants organiques requièrent des installations spéciales de façon à prévenir le relargage de vapeurs de solvant dans l'environnement, ainsi que des équipements adaptés au stockage et à la manipulation de ces solvants en grandes quantités lors de leur utilisation.

Le remplacement des solvants organiques utilisés au cours de ces procédés par un solvant non polluant tel que l'eau a déjà été envisagé, notamment dans la demande internationale WO 2004/045007. Selon ce procédé, on enduit un support avec une solution aqueuse renfermant un matériau actif d'électrode positive et un liant constitué d'un caoutchouc synthétique soluble dans l'eau en mélange avec un agent épaississant. Il est ensuite nécessaire de sécher le film déposé sur le support pendant une durée d'au moins 12 à 24 heures pour réduire la teneur en eau jusqu'à une valeur inférieure à 2000 ppm et de préférence inférieure à 50 ppm. Il n'est pas possible d'incorporer de sels de lithium à cette solution dans la mesure où ceux-ci, du fait de leurs propriétés hygroscopiques, auraient pour effet de retenir l'eau présente dans le film et d'augmenter encore la durée de l'étape de séchage nécessaire à l'élimination de l'eau après enduction de la solution aqueuse sur le support. Dans ce cas, le film obtenu est donc poreux pour pouvoir permettre son imprégnation ultérieure par un sel de lithium lors de l'assemblage avec les autres composants de la batterie et permettre l'échange ionique entre la cathode et l'anode. Le procédé décrit dans la demande internationale WO 2004/045007 n'est donc pas utilisable pour produire des batteries à base de lithium dans lesquelles il est requis d'incorporer le sel de lithium dans le matériau d'électrode positive avant son assemblage avec les autres composants de la batterie.

Le brevet US2006166093 décrit un procédé de préparation par extrusion en présence d'un solvant aqueux d'une électrode positive comprenant un matériau actif d'électrode $LiFePO_4$, un polymère hydrosoluble liant. Il est également possible de préparer des électrodes positives par extrusion en voie sèche (sans solvant). Dans ce cas, les différents composants entrant dans la composition du matériau d'électrode sont introduits dans une extrudeuse mono-vis ou bi-vis puis extrudés à travers une filière plate sur un support. Le mélange des différents composants du matériau d'électrode présente cependant une forte viscosité, ce qui limite généralement la teneur en matériau actif d'électrode qu'il est possible d'incorporer. Ainsi, dans le cas où du $LiFePO_4$ est utilisé comme matériau actif d'électrode positive, le pourcentage maximal pouvant être incorporé dans le matériau final d'électrode est de 65 % environ, le plus souvent inférieur à 60 % par rapport au poids total à sec de l'électrode. Il n'est à cet égard généralement pas possible de recourir à une hausse de la température pour diminuer la viscosité du système pendant l'extrusion en raison de la nature même du polymère utilisé (polyéther) qui est thermosensible et serait dégradé. Par ailleurs, le primaire généralement obtenu, de quelques centaines de microns d'épaisseur, doit être laminé ou calandré pour obtenir un film d'électrode de quelques dizaines de microns, généralement $\leq 65 \mu m$ en fonction des applications recherchées. Cette étape de laminage ou de calandrage ne peut généralement pas s'effectuer directement sur le collecteur de courant en raison des trop fortes contraintes d'écrasement et de cisaillement liées à la viscosité, qui entraînent, le plus souvent, la casse du collecteur de courant (collecteur aluminium $< 30 \mu m$). Il est donc nécessaire dans un premier temps préparer le matériau d'électrode et de procéder ensuite à une étape supplémentaire dite de "complexage" (thermocollage par pression de la cathode sur le collecteur) au cours de laquelle le matériau sera assemblé sur le collecteur de courant. Dans ce contexte de complexage « différé », il est généralement plus délicat d'obtenir une qualité optimale d'interface entre le matériau d'électrode et le collecteur de courant, alors que dans le cas d'un laminage ou d'un calandrage direct du matériau d'électrode extrudé sur le collecteur de courant, les contraintes de laminage ou de calandrage, outre leur fonction de calibration de l'épaisseur, favorisent l'ancrage du film d'électrode à la surface du collecteur et créent ainsi une interface de meilleure qualité, bénéfique pour l'homogénéité et la qualité des échanges électroniques au sein de la batterie.

Il existe donc un besoin pour un procédé de préparation d'un matériau d'électrode positive à base de phosphate de fer et en particulier à base de $LiFePO_4$, qui permette :

- d'accéder à des cathodes ayant une teneur élevée en matériau actif, en général supérieure à 60 %, de préférence supérieure à 70 %, tout en limitant au maximum leur porosité ;
- de pouvoir déposer le matériau de cathode directement sur le collecteur de courant, sans procéder à une étape de complexage ;
- d'obtenir des films de cathode ayant une épaisseur inférieure à 100 $\mu m$, de préférence inférieure à 65 $\mu m$ ;
- d'obtenir des films de qualité (homogène, de faible porosité comme évoqué précédemment, présentant un profil d'épaisseur régulier sur toute la laize sans amincissement des bords et aboutissant à de bonnes performances électrochimiques.
- de permettre, lorsqu'on le souhaite, l'incorporation de sels de lithium dans le mélange de constituants de l'électrode avant son assemblage avec les autres composants de la batterie.

La présente invention a donc pour objet un procédé de préparation d'une électrode positive selon les revendications déposées, constituée d'un matériau composite comprenant les ingrédients suivants :

- au moins un matériau actif d'électrode positive choisi parmi les matériaux à base de phosphate de fer,
- au moins un polymère hydrosoluble et ayant des propriétés de conduction ionique en présence d'un sel de lithium ; et
- éventuellement au moins un matériau conférant des propriétés de conduction électronique,

ledit procédé comportant au moins une étape de mélange, par extrusion, des ingrédients du matériau composite pour obtenir un matériau composite extrudé, au moins une étape de mise en forme du matériau extrudé au travers d'une filière, au moins une étape de laminage ou de calandrage du matériau composite extrudé sous la forme d'un film d'électrode positive sur un collecteur de courant, et au moins une étape de séchage du film d'électrode positive appliqué sur le collecteur de courant,

ledit procédé étant caractérisé en ce que l'étape d'extrusion est réalisée au moyen d'un comalaxeur, d'une extrudeuse bi-vis, ou d'une extrudeuse multivis (nombre de vis >2), en présence d'un solvant aqueux constitué d'eau déminéralisée ou distillée ou d'un mélange d'eau déminéralisée ou distillée et d'au moins un solvant hydromiscible représentant au maximum 30 % en masse de la masse totale du solvant aqueux, ledit solvant aqueux représentant de 3 à 25 % environ en masse par rapport à la masse totale des ingrédients constituant le matériau composite, et à une température de 20 à 95°C.

Le procédé conforme à l'invention présente les avantages suivants :

- le solvant aqueux est utilisé comme additif pour faciliter l'extrusion en agissant comme un plastifiant abaissant la viscosité du mélange sans apport thermique, ce qui autorise une température d'extrusion basse, compatible avec l'utilisation de polymères thermosensibles (température d'extrusion de 20 à 95°C) ;

- la modularité du profil de vis, du profil de température et des configurations d'alimentation permettent d'assurer la mise en oeuvre de différentes formulations et de panacher/nuancer les propriétés de la cathode ;

- la réduction de la viscosité et de la température d'extrusion limite les contraintes mécaniques et thermiques habituellement exercées en extrusion voie sèche pour fondre le matériau et enrober les charges. En conséquence il n'est pas indispensable d'ajouter des antioxydants dans le matériau composite d'électrode positive ;

- il permet d'accéder à des cathodes ayant une teneur élevée en matériau actif, en général supérieure à 60 %, de préférence supérieure à 70 %, tout en limitant leur porosité et d'obtenir des films de cathode ayant une épaisseur inférieure à 100 $\mu$m, de préférence inférieure à 65 $\mu$m.

Par rapport aux procédés de préparation de matériaux d'électrode par extrusion en voie sèche, le procédé conforme à l'invention présente les avantages suivants :

- les contraintes générées par la mise en oeuvre de l'extrusion en voie sèche exercent généralement une action de dégradation sur le polymère ; ce qui peut, de plus, engendrer la formation de polluants susceptibles de perturber l'électrochimie *in fine* ;

- l'étape de mélange dans l'équipement d'extrusion s'effectue en ligne avec l'étape de laminage ou de calandrage du matériau composite extrudé sur le collecteur de courant ;

- le laminage ou de calandrage direct du matériau extrudé sur le collecteur de courant permet d'assurer une cohésion et une interface de bonne qualité. Le procédé conforme à l'invention autorise le laminage ou de calandrage d'un film de cathode d'une épaisseur < 65 $\mu$m sur un collecteur de courant constitué par exemple d'un substrat en aluminium d'une quinzaine de microns d'épaisseur. En modulant la viscosité, il est possible de laminer ou de calandrer un film cathode sur des substrats aluminium dont l'épaisseur est $\leq$ 12 $\mu$m ;

- la basse viscosité du mélange des ingrédients constituant le matériau composite extrudé facilite le franchissement de la filière à la sortie de l'extrudeuse puis le laminage ou le calandrage en ligne, et permet l'obtention directe d'un film de cathode de largeur stable. Ainsi, le procédé conforme à l'invention permet de fabriquer des cathodes de plus de 700 mm de large sans qu'il soit nécessaire de recourir à l'utilisation de lisières pour obtenir un film de largeur constante.

En conséquence, le procédé en voie aqueuse conforme à l'invention est moins consommateur en énergie, engendre moins d'usure au niveau des équipements, et s'avère moins "perturbateur" vis-à-vis du polymère et de l'électrochimie.

L'étape d'extrusion est de préférence conduite à une température de 35 à 80°C.

Selon une forme de réalisation préférée de l'invention, l'étape d'extrusion est réalisée au moyen d'une extrudeuse bi-vis.

La bi-vis de l'extrudeuse utilisable selon le procédé de l'invention est de préférence une bi-vis corotative.

Dans ce cas, l'extrudeuse bi-vis utilisable conformément au procédé de comporte de préférence un fourreau sectionnel, modulaire constitué d'une dizaine de blocs successifs, individuellement régulés à une température spécifique choisie et dans lesquels tournent deux vis parallèles, un moto-réducteur à vitesse variable entraînant les vis, un ou plusieurs dispositifs d'alimentation à débits variables (doseurs pondéraux ou volumétriques) destinés à alimenter l'extrudeuse avec les ingrédients entrant dans la composition du matériau composite d'électrode, un système d'introduction du solvant aqueux liquide (dispositif gravimétrique, ou pompe d'injection liquide, dédié à l'introduction du solvant aqueux dans l'extrudeuse), et éventuellement un ou plusieurs dispositifs de gavage latéral pour convoyer la matière dans la chambre de la bivis. L'extrudeuse bivis est en outre munie de différents puits d'alimentation (pour les doseurs et dispositifs d'alimentation précités), d'un ou de plusieurs ensembles fourreaux spécifiques dédiés à la connexion éventuelle de la ou des buses d'injection liquide, et éventuellement d'un ou de plusieurs ensembles fourreaux destinées à accueillir la ou les connexions d'un gaveur latéral. Ces différents équipements modulaires peuvent être disposés le long de la bivis, selon la configuration choisie. La possibilité de dédier un doseur à chaque matière entrant dans la composition du mélange à extruder permet également d'alimenter indifféremment des granulés ou de la poudre en fonction du type de doseur sélectionné.

L'extrudeuse bivis permet d'assurer le mélange des différents ingrédients en vue de l'obtention d'une pâte homogène grâce à la combinaison des forces de cisaillement imprimés à la matière et des flux de mélangeage distributifs et dispersifs. La qualité du mélange final est essentiellement dépendante des éléments constitutifs du profil de vis, notamment des malaxeurs, du taux de remplissage, et des vitesses de cisaillement impliquées. En parallèle, la diminution de la viscosité obtenue avec l'apport d'eau permet de limiter les contraintes mécaniques et thermiques sur la matrice polymère au niveau du franchissement des différentes barrettes de malaxeurs, et donc d'éviter l'autoéchauffement susceptible de dégrader le ou les polymères hydrosolubles qui sont thermosensibles. L'intensité du cisaillement et la gestion des flux dispersifs / distributifs sont modulées par les éléments de bivis, leur nature, nombre, état et agencement le long de la vis. C'est principalement du type de malaxeurs choisis (monolobe, bilobes, trilobes...), de la largeur de lobe (sommet du lobe sur lesquels s'exercent les forces de cisaillement), de l'angle entre l'axe des lobes de 2 éléments malaxeurs successifs (ajustable en fonction des effets dispersifs / distributifs recherchés), et de la répartition de ces malaxeurs au long de la vis, que l'on pourra agir sur la qualité du mélange, pour un type de configuration d'alimentation donnée. Des éléments spéciaux tels que des pas inverses, ou des lobes crénelés, peuvent également être employés pour optimiser le mélange en fonction de la formulation, des caractéristiques du polymère, du type et de la structure des charges, et des propriétés finales recherchées.

L'invention peut être déclinée sur de petites extrudeuses bivis type laboratoire (par exemple des extrudeuses de diamètre 18 mm) comme sur des extrudeuses industrielles dont le diamètre peut excéder 200 mm ; ces extrudeuses présentant généralement un rapport longueur (L) / diamètre (D) (L/D) situé entre 25 et 55 et disposent d'une dizaine de zones environ (de 7 à 13 généralement).

Parmi les solvants hydromiscibles éventuellement utilisables dans le solvant aqueux, on peut citer les alcools inférieurs tels que le méthanol, l'éthanol, le propanol et le butanol, ainsi que les glycols. Parmi de tels solvants, l'éthanol est préféré.

Lorsqu'il est présent, le solvant hydromiscible représente de préférence moins de 15 % en masse par rapport à la masse totale du solvant aqueux.

Selon une forme de réalisation préférée de l'invention, la quantité de solvant aqueux utilisée pendant l'étape d'extrusion varie de 8 à 15 % environ en masse par rapport à la masse totale des ingrédients constituant le matériau composite.

Il est possible d'introduire le solvant aqueux dans l'extrudeuse soit en multi points, soit dans plusieurs zones distinctes, si l'on souhaite moduler les paramètres de malaxage. Une première phase de mélange peut s'effectuer sur une pâte encore relativement visqueuse, pour intensifier le mélange dispersif et distributif ; d'autres phases successives d'introduction peuvent ensuite être réalisées, ce qui permet d'abaisser progressivement la viscosité pour poursuivre en douceur le malaxage du mélange. De façon générale, il est possible de moduler la viscosité de la pâte de cathode en fonction du procédé, de la formulation et des propriétés recherchées en jouant sur le pourcentage de solvant aqueux introduit dans la bivis.

Pour des mélanges types testés à une température de 70°C, les viscosités sont de l'ordre 500 à 1000 Pa.s pour un taux de cisaillement d'environ 500 s$^{-1}$, de 100 à 500 Pa.s pour un taux de cisaillement de l'ordre de 1000 s$^{-1}$ et généralement inférieures à 250 Pa.s pour un taux de cisaillement > 2000 s$^{-1}$ (ce qui révèle un comportement thixotropique, autrement dit que la viscosité décroît avec le taux de cisaillement). Ces mesures de viscosité ont été réalisées un rhéomètre capillaire bicanal vendu sous la RH 2200 ® par la société Rosand, permettant d'intégrer les corrections de Bagley et Rabinowitch.

L'introduction de la solution aqueuse en une quantité déterminée peut se faire également gravimétriquement dans la ou les zones adaptées de l'extrudeuse.

Selon une forme de réalisation préférée de l'invention, un dispositif de montée et de stabilisation de la pression est positionné en sortie de l'extrudeuse, avant la filière pour assurer le franchissement de la filière, et l'obtention d'un primaire régulier. A titre de tels dispositifs, on peut par exemple mentionner les extrudeuses monovis de reprise et les pompes d'extrusion à engrenage (pompe à « melt »).

Selon une forme de réalisation de l'invention, on utilise une extrudeuse monovis de reprise ayant un profil de température de 20 à 95°C. La vitesse de rotation sera à adapter en fonction du débit et de la taille de la monovis selon les connaissances générales de l'homme du métier.

Ensuite, une filière, généralement cylindrique ou plate, placée en aval du dispositif de montée et de stabilisation de pression en fin de ligne d'extrusion, présente l'extrudât à l'entrée du dispositif de laminage ou de calandrage. Selon la présente invention, on préfère l'utilisation d'une filière plate dont la forme se rapproche de la géométrie du produit final (électrode positive) et favorise l'obtention d'une laize stable.

L'extrudât sortant de la filière est ensuite laminé ou calandré sur le collecteur de courant. Pour résoudre le problème éventuel du collage de la cathode sur les cylindres, on peut utiliser un film protecteur qui défile à la vitesse du laminage ou du calandrage (par exemple un film de polypropylène (PP), de polyéthylène téréphtalate (PET) ou des films plastiques dotés d'une fonction antiadhérente. Cette pellicule est ensuite retirée avant l'opération de séchage. Il est possible de recycler plusieurs fois cette pellicule qui est peu sollicitée mécaniquement et thermiquement lors de l'étape de laminage ou de calandrage. Une solution alternative consiste à utiliser une courroie antiadhérente qui défile sur le cylindre en contact avec l'extrudat. Il est également possible de recourir à des cylindres en matière antiadhésive ou bénéficiant de revêtements antiadhésifs compatibles avec la qualité d'état de surface recherché du produit final.

Dans une forme de réalisation préférée de l'invention, la filière est positionnée à proximité du lamineur. L'extrudât ou primaire de quelques centaines de microns d'épaisseur est laminé ou calandré à l'épaisseur requise pour obtenir l'épaisseur cible une fois le matériau composite séché. L'équipement de laminage ou de calandrage est réglable en température, entrefer, force d'appui.

Selon une forme de réalisation préférée de l'invention, l'étape de laminage ou de calandrage est réalisée à l'aide d'un équipement de laminage ou de calandrage constitué de 2 cylindres tournant en sens inverse. Chaque cylindre peut-être individuellement régulé en température dans une plage de 15 à 95°C. La vitesse linéaire dépend du débit matière en entrée, de la laize et de l'épaisseur du produit ciblé. L'optimisation de la distance entre la filière et l'équipement de laminage ou de calandrage permet de gérer l'introduction de l'extrudât entre les cylindres et le comportement stabilisé de la laize finale.

Dans une forme de réalisation préférée de l'invention, le temps de séjour de l'eau dans le matériau composite est minimisé, notamment pour éviter la dégradation du matériau actif à base de phosphate de fer. Il est également nécessaire de minimiser le temps de séjour de l'eau lorsque le matériau composite extrudé non séché est en contact avec le collecteur de courant pour éviter certains phénomènes de corrosion susceptibles de se produire en présence d'eau sur certains collecteurs en fonction de leur revêtement. C'est pourquoi l'étape de séchage est de préférence effectuée en ligne, afin de préserver l'intégrité du produit et d'optimiser sa qualité mais aussi pour répondre aux impératifs de cadence industrielle.

Selon le procédé conforme à l'invention, les différents ingrédients constituant le matériau composite sont ajoutés directement dans l'extrudeuse (il n'est pas nécessaire de recourir à des préparatifs particuliers ou à la préparation de mélanges préalables).

Les ingrédients entrant dans la composition du matériau composite d'électrode peuvent ainsi être introduits dans l'extrudeuse sous la forme d'un mélange contenu dans un seul doseur pondéral ou volumétrique, ou bien être répartis, à un ou plusieurs, dans des doseurs pondéraux ou volumétriques différents disposés en série les uns par rapport aux autres. Alternativement à l'alimentation gravimétrique, il est également possible de connecter un ou plusieurs de ces doseurs sur un ou plusieurs gaveurs latéraux arrimés à l'extrudeuse et permettant d'acheminer la ou les matières premières désirées dans l'extrudeuse. Ce type de périphérique est couramment utilisé en extrusion pour assurer l'introduction régulière de produits éventuellement difficiles à doser gravimétriquement.

Selon une forme de réalisation préférée de l'invention, le matériau actif d'électrode positive, le polymère hydrosoluble et le matériau conférant des propriétés de conduction électronique sont chacun contenus dans des doseurs différents et introduits successivement et/ou simultanément dans les différentes zones choisies de l'extrudeuse, en aval ou en amont de la zone d'introduction du solvant aqueux.

L'introduction, en quantité déterminée, du solvant aqueux peut se faire gravimétriquement dans la ou les zones adaptées de l'extrudeuse. Le solvant aqueux est de préférence injecté directement dans l'extrudeuse, au moyen d'une pompe d'injection liquide.

Selon une forme de réalisation préférée de l'invention, l'extrusion est réalisée à un débit de 2 à 200 kg du mélange des ingrédients (matières sèches) entrant la composition du matériau d'électrode par heure. Ainsi, et à titre d'exemple, pour un un débit d'ingrédients secs de 100 kg/h dans lequel on ajoute environ 12 % en masse de solvant aqueux, le débit total (ingrédients sec + solvant aqueux) est alors d'environ 113,6 kg/h.

Le matériau actif d'électrode est de préférence du $LiFePO_4$ se présentant sous la forme de particules nues ou comportant un revêtement carboné. Dans ce dernier cas, il n'est pas nécessaire d'ajouter un matériau conférant des propriétés de conduction électronique au mélange des ingrédients entrant dans la composition du matériau composite, ou alors dans une moindre quantité, du fait de la présence de carbone à la surface des particules de $LiFePO_4$.

Le matériau actif d'électrode représente de préférence de 60 à 85 % en masse environ, et encore plus préférentiellement de 70 à 80 % en masse environ de la masse totale des ingrédients entrant dans la composition du matériau composite à l'état sec.

Le polymère hydrosoluble utilisable selon l'invention se présente de préférence sous la forme de poudre, de granulés ou d'une dispersion aqueuse. Il est de préférence choisi parmi les polyéthers tels que les polymères, copolymères et terpolymères de polyoxyéthylène (POE), polyoxypropylène et polyoxybutylène.

Ce polymère représente de préférence de 10 à 30 % en masse environ et encore plus préférentiellement de 15 à 25 % en masse environ, par rapport à la masse totale des ingrédients entrant dans la composition du matériau composite à l'état sec.

Le matériau conférant des propriétés de conduction électronique peut être du carbone, de préférence choisi parmi les noirs de carbone tels que le noir d'acétylène, les noirs de carbone à haute surface spécifique tels que le produits vendus sous la dénomination Ketjenblack® EC-600JD par la société AKZO NOBEL, des nanotubes de carbone, du graphite, ou des mélanges de ces matériaux. Il peut également s'agir d'une dispersion aqueuse de noir de carbone ou de graphite tel que le produit vendu sous la dénomination commerciale Electrodag® EB-012 par la société ACHESON.

Selon l'invention, le matériau conférant des propriétés de conduction électronique représente de préférence de 0 à 10 % en masse environ lorsque des carbones de faible surface spécifique sont utilisés (à titre indicatif, surface spécifique inférieure à 200 m$^2$/g) ou entre 0 et 2,5 % en masse environ lorsque des carbones de haute surface spécifique sont utilisés (à titre indicatif, surface spécifique supérieure à 1000 m$^2$/g), lesdits pourcentages étant exprimés par rapport à la masse totale des ingrédients entrant dans la composition du matériau composite à l'état sec. Le pourcentage de carbone est à moduler en fonction du taux de carbone déjà éventuellement compris dans les particules de LiFePO$_4$. L'utilisation de particules de LiFePO$_4$ suffisamment enrobées de carbone permettrait de s'affranchir de la nécessité d'ajouter une charge carbonée. A l'inverse l'utilisation de particules nues de LiFePO$_4$ nécessite généralement d'incorporer un matériau conducteur.

Pour fonctionner électro-chimiquement, le matériau composite d'électrode positive doit renfermer au moins un matériau conférant des propriétés de conduction ionique. Ce matériau peut être un sel de lithium choisi notamment parmi LiAlCl$_4$, Li$_2$Al$_2$Cl$_6$O, LiClO$_4$, LiPF$_6$, LiAsF$_6$, LiBF$_4$, LiCF$_3$SO$_3$, LiSbF$_6$, LiSbCl$_6$, Li$_2$TiCl$_6$, Li$_2$SeCl$_6$, Li$_2$B$_{10}$Cl$_{10}$, Li$_2$B$_{12}$Cl$_{12}$, LiBOB, LiBETI, LiFSI, et LiTFSI.

La teneur finale en sel de lithium varie de préférence de 3 à 10 % environ en masse, et encore plus préférentiellement de 4 à 8 % environ en masse par rapport à la masse totale du matériau composite d'électrode après séchage du film.

Selon une première variante de l'invention, le sel de lithium est ajouté aux ingrédients entrant dans la composition du matériau composite de l'électrode lors de l'étape d'extrusion. Dans ce cas, il s'agit d'un sel hydrosoluble et non hydrolysable (contre ion stable dans l'eau), tel que LiTFSI, LiClO$_4$ ou LiBETI.

Selon une forme de réalisation particulière et préférée du procédé de l'invention, le solvant aqueux utilisé lors de l'étape d'extrusion renferme alors ledit sel de lithium en solution. L'introduction d'un solvant aqueux comprenant un sel de lithium présente l'avantage de limiter les inconvénients liés à la manipulation de sel en poudre (risques de contamination et produit collant / déliquescent en atmosphère non anhydre).

Selon une deuxième variante de l'invention, le sel de lithium est incorporé *a posteriori* dans le matériau composite de l'électrode, c'est-à-dire après l'étape de séchage du film, par diffusion depuis un électrolyte après mise en contact de ce dernier à la surface du film d'électrode.

Selon l'invention, l'étape de laminage ou de calandrage est effectuée directement sur une au moins des deux faces d'un collecteur de courant, par application du matériau composite extrudé en sortie de la filière. Cette étape de laminage ou de calandrage est de préférence effectuée à une température de 20 à 95°C, et encore plus préférentiellement de 30 à 70°C.

Le film du matériau composite appliqué sur le collecteur de courant présente de préférence une épaisseur inférieure ou égale à 100 μm environ, et encore plus préférentiellement inférieure ou égale à 65 μm environ.

Le collecteur de courant pour l'électrode positive est généralement constitué d'une feuille d'aluminium d'une épaisseur allant de 4 μm à 30 μm, préférentiellement de 5 à 15 μm, possédant en outre des couches de protection anticorrosion sur chacune des faces en contact avec le matériau composite d'électrode, pour éviter toute réaction chimique au contact de ses constituants, notamment avec le sel de lithium que celui-ci fasse partie des ingrédients introduits dans la bi-vis de l'extrudeuse ou qu'il soit ajouté ultérieurement lors de l'assemblage des différents composants de la batterie. Cette couche de protection anticorrosion peut par exemple être constituée d'une laque conductrice électroniquement, chimiquement inerte vis-à-vis des composants de la cathode, ou bien d'un revêtement chimiquement inerte vis-à-vis des composants de la cathode comme par exemple une couche d'or ou une couche de nitrure de titane.

L'étape de séchage du film appliqué sur le collecteur de courant est de préférence effectuée en ligne. Elle a pour but d'éliminer l'eau utilisée lors de l'étape d'extrusion présente dans le film. Différentes techniques de séchage du film, classiques dans le domaine et bien connues de l'homme de l'art, peuvent être utilisées, éventuellement en combinaison, lors de l'étape de séchage. Parmi de telles techniques, on peut notamment mentionner la conduction thermique, la convection thermique et le rayonnement.

Selon une forme de réalisation préférée du procédé conforme à l'invention, le séchage du film appliqué sur le collecteur de courant (feuille) est effectué par convexion dans un four de séchage intégrant la technique de flottaison horizontale (auto-sustentation), c'est-à-dire dans un four de séchage disposant de lames d'air supérieures et inférieures disposées en série les unes par rapport aux autres permettant d'assurer la sustentation de la feuille, également dénommé tunnel de séchage.

Dans ce cas, le collecteur de courant supportant le film de matériau composite introduit dans le four est auto supporté, c'est-à-dire qu'il est maintenu à une altitude donnée dans le four par les lames d'air orientées alternativement vers la surface inférieure et la surface supérieure du film. Ces lames d'air sont émises par des buses de soufflage disposées alternativement de part et d'autre du film afin d'assurer la sustentation de la feuille sans aucun contact mécanique avec les buses et/ou les autres parties mécaniques du four. Un tel four est généralement constitué de différentes zones individuellement régulées en température et permettant de créer un profil de température de l'air de séchage, ainsi que d'adapter la vitesse de l'air par réglage de la pression / débit de soufflage au niveau des buses. Le film circule dans le four à la vitesse de laminage ou de calandrage fixée pour un débit donné et un format de cathode donné. L'eau est éliminée du film par convection thermique forcée. Un système de déshumidification peut également être intégré au four, de façon assécher l'air en entrée du sécheur afin d'optimiser la capacité d'absorption d'eau de l'air. A titre d'exemple, on peut notamment utiliser un tunnel de séchage comportant plusieurs zones distinctes de séchage de quelques mètres de long chacune et dans lequel, l'air est chauffé. De manière générale, la température de l'air peut varier de 60°C à 200°C, et la vitesse de soufflage de l'air issu des buses est de l'ordre de 25 à 50 m/s dans chacune des zones. Dans chaque zone de température, la vitesse de circulation de l'air peut être spécifiquement fixée de façon à éliminer une quantité maximale de molécules de solvant aqueux présentes dans le film sans entraîner sa déformation et sans créer de porosité. Chacune de ces zones provoque l'élimination d'une quantité de plus en plus importante de solvant aqueux jusqu'à l'obtention d'un film substantiellement sec, c'est-à-dire d'un film contenant moins de 1000 ppm, et encore plus préférentiellement moins de 600 ppm d'eau. Le tunnel de séchage peut bien sûr comporter plus ou moins de zones de séchage en fonction de sa géométrie et de sa longueur utile, et des paliers de température nécessaires au bon séchage du film.

L'électrode positive obtenue selon le procédé décrit précédemment constitue un autre objet de l'invention selon les revendications déposées. Elle est caractérisée en ce qu'elle se présente sous la forme d'un film d'un matériau composite dans lequel le matériau actif d'électrode est un matériau à base de phosphate de fer, de préférence du $LiFePO_4$, et en ce que :

- la teneur en matériau actif d'électrode est supérieure à 60 %, de préférence supérieure à 70 % en masse par rapport à la masse totale de l'électrode à l'état sec,
- son épaisseur est inférieure à 100 $\mu$m, de préférence inférieure à 65 $\mu$m,
- sa porosité est inférieure à 3 %, de préférence inférieure à 1%,
- sa teneur en eau est inférieure à 1000 ppm, de préférence inférieure à 600 ppm.

L'électrode conforme à l'invention peut être déclinée en plusieurs largeurs variant typiquement des plus petites largeurs, c'est-à-dire de l'ordre du centimètre, jusqu'à des valeurs pouvant être supérieures à 700 mm. En effet, la mise en oeuvre du procédé conforme à la présente invention permet d'atteindre des largeurs importantes, supérieures aux largeurs généralement réalisables selon les procédés connus de l'art antérieur, et ce sans que l'on observe une altération rédhibitoire des caractéristiques intrinsèques de l'électrode positive.

L'invention a pour objet l'utilisation d'une électrode positive telle définie précédemment, pour la fabrication d'une batterie au lithium, en particulier d'une batterie LMP.

Enfin, l'invention a également pour objet une batterie au lithium comportant au moins une électrode positive, une électrode négative, un électrolyte et un collecteur de courant, caractérisée en ce que l'électrode positive est une électrode telle que définie précédemment.

La présente invention est illustrée par l'exemple de réalisation suivant, auquel elle n'est cependant pas limitée.

**EXEMPLES**

**Exemple 1 : Préparation d'une électrode positive selon le procédé de l'invention**

Dans cet exemple, on a préparé une électrode positive selon le procédé conforme à l'invention, à un débit de 10 kg/h, en utilisant une extrudeuse bi-vis corotative équipée de plusieurs doseurs pondéraux, dont un connecté sur un gaveur latéral, ainsi que d'une pompe d'injection liquide, une monovis de reprise couplée à une filière plate, une unité de laminage sur un collecteur de courant et un tunnel de séchage.

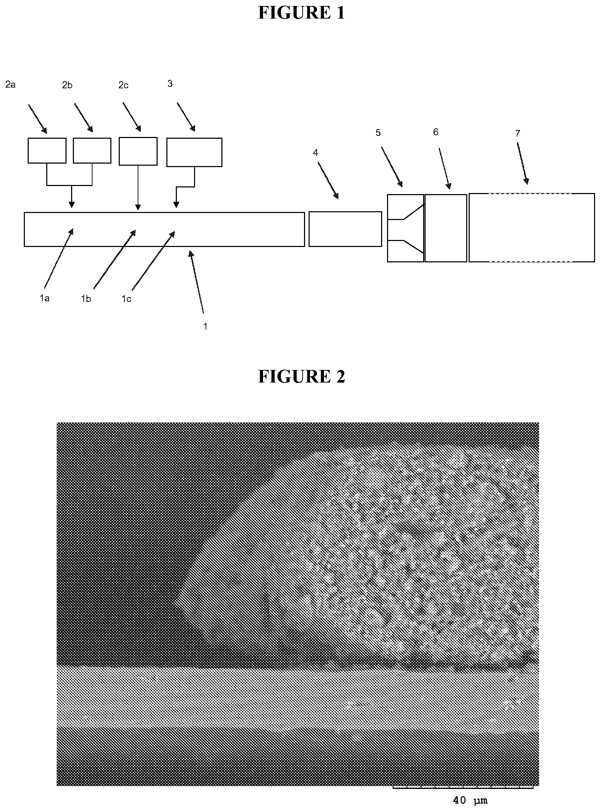

Le montage utilisé est représenté sur la figure 1 annexée sur laquelle une extrudeuse bi-vis (1) de 1,1 mètre de long, comportant 10 zones et ayant un diamètre de 25 mm est alimentée en ingrédients secs par des doseurs pondéraux (2a, 2b, 2c), et en solvant aqueux (eau déminéralisée + LiTFSI) par une pompe à injection liquide (3), l'extrudeuse (1) est couplée à une monovis de reprise (4) ayant un diamètre de 30 mm, elle-même équipé d'une filière plate (5), débouchant sur un poste de laminage (6) et aboutissant à un four de séchage par convexion forcée (7).

L'électrode positive a été préparée en introduisant dans le doseur (2a) un copolymère Poly (Ethylene Oxide-Butylene Oxide) sous forme de granulés vendu sous la dénomination commerciale HQSEB par la société DKS DAI-ICHI KOGYO SEIYAKU, dans le doseur (2b) des particules de carbone à haute surface spécifique vendues sous la dénomination commerciale Ketjen Black EC-600 JD par la société AKZO NOBEL et dans le doseur (2c) connecté sur le gaveur latéral, des particules de $LiFePO_4$. Les débits des doseurs pondéraux ont été réglés de manière à obtenir, après mélange dans l'extrudeuse et avant séchage, un matériau composite extrudé renfermant 16,4 % en masse de polymère, 1,3 % en masse de particules de carbone et 65,1 % en masse de $LiFePO_4$. Le contenu de doseurs (2a), (2b) et (2c) a été introduit successivement dans la bi-vis (1a et 1b). De l'eau déminéralisée renfermant 30 % en masse de LiTFSI a également été introduite au moyen de la pompe d'injection liquide (3) dans la bi-vis (1c), en une quantité suffisante pour obtenir, après mélange de l'ensemble des ingrédients dans la bi-vis de l'extrudeuse (1), un matériau composite extrudé renfermant 10 % en masse d'eau. Le débit total à sec a été réglé à 10 kg/h, soit à un débit d'environ 11,1 kg/h en tenant compte de la masse d'eau injectée. L'extrusion a été réalisée à une température de 80°C avec une vitesse de rotation de la bi-vis de l'ordre 220 tours/min. Le matériau composite résultant de l'extrusion a ensuite été repris par la monovis de reprise (4), à une vitesse de 25 tours/min et à une température de 80°C, pour être acheminé jusqu'à la filière plate (5) avant l'étape finale de laminage (6) au cours de laquelle le mélange extrudé a été laminé sur un collecteur de courant constitué d'une feuille d'aluminium de 15 $\mu$m d'épaisseur, revêtue sur chaque face d'une laque protectrice conductrice électronique ayant une épaisseur de 2 $\mu$m et constituée de 30 % en masse de noir d'acétylène et de 70 % en masse de polyfluorure de vinylidène/hexafluoropropylène (PVDF/HFP), à une vitesse de laminage de 4,5 m/min. Le film de matériau extrudé appliqué sur le collecteur de courant a ensuite été séché en ligne pour éliminer l'eau par passage dans un four de séchage (7) de longueur utile 6 mètres par convection forcée avec un débit d'air sec de séchage de point de rosée -30°C de l'ordre de 120 m$^3$/h circulant à contre courant à une température de 130°C.

On a ainsi obtenu une électrode positive, déposée directement sur un collecteur de courant, ladite électrode se présentant sous la forme d'un film fin de matériau composite ayant une épaisseur de 62 $\pm$ 2 $\mu$m, une porosité inférieure à 1,5 %, une largeur de 250 $\pm$ 1 mm et une teneur en eau inférieure à 600 ppm.

Un cliché pris en microscopie électronique à balayage (MEB) est représenté sur la figure 2 annexée (grossissement x 1000).

Ce cliché montre que le film d'électrode présente des bords de bonne qualité et d'une épaisseur régulière.

Par ailleurs, et afin de valider l'absence de dégradation du polymère utilisé lors de la préparation de l'électrode, des mesures de viscosité en solution ont été effectuées sur le polymère HQSEB avant extrusion. Les étapes du protocole opératoire comprennent la dissolution du polymère en présence de sel de lithium dans l'eau à 1 % massique (18 h à 40°C sous agitation douce dans un bain-marie), la filtration sur filtre papier de type «Durieux ® sans cendres, filtration dite rapide» et la mesure de la viscosité cinématique sur un ensemble de viscosimétrie de la marque Schott® constitué d'un tube capillaire ubbelohde (série Ic, K~0.03 étalonné) placé dans un bain thermostaté (Schott® modèle CT32) à 30°C sur un socle muni de capteurs optiques connectés à un enregistreur de temps (Schott® Geräte type AVS 310) permettant de mesurer avec précision le temps de descente d'un volume précis spécifique de la solution à travers le capillaire de diamètre spécifique connu. La viscosité a été déduite du temps de mélange en utilisant la loi de Poiseuille. Une viscosité de 7 $\pm$ 0.1 mm$^2$/s a été obtenue avant extrusion. La même analyse a été conduite sur le polymère issu d'un échantillon du film de cathode extrudé après une première étape de dissolution de la cathode (18 h à 40°C sous douce agitation dans un bain-marie) pour obtenir une solution de 1 % massique en polymère au final, une seconde étape de séparation des charges (matière active et chargée carbonée) par centrifugation (20 minutes à 350 tours / minute) et une étape de filtration (sur filtre DURIEUX ® avant introduction de la solution dans le tube ubbelohde.

Une viscosité de 6,8 $\pm$ 0,1 mm$^2$/s a été obtenue après extrusion, ce qui démontre que le procédé d'extrusion conforme à l'invention ne dégrade pas le polymère entrant dans la composition du mélange utilisé pour la fabrication de l'électrode.

### Exemple 2 : Préparation d'une électrode positive selon le procédé de l'invention

Dans cet exemple, on a préparé une électrode positive selon le procédé conforme à l'invention, à un débit de 100 kg/h, en utilisant une extrudeuse bi-vis corotative équipée de plusieurs doseurs pondéraux, dont un connecté sur un gaveur latéral, ainsi que d'une pompe d'injection liquide, une monovis de reprise couplée à une filière plate, une unité de laminage sur un collecteur de courant et un tunnel de séchage.

Le montage utilisé est similaire à celui de l'exemple 1.

L'électrode positive a été préparée en introduisant dans le doseur (2a) un copolymère Poly (Ethylene Oxide-Butylene Oxide) sous forme de granulés vendu sous la dénomination commerciale HQSEB par la société DKS DAI-ICHI KOGYO SEIYAKU, dans le doseur (2b) des particules de carbone haute surface spécifique vendues sous la dénomination commerciale Ketjen Black EC-600 JD par la société AKZO NOBEL et dans le doseur (2c) connecté sur le gaveur latéral, des particules de LiFePO$_4$. Les débits des doseurs pondéraux ont été réglés de manière à obtenir, après mélange dans l'extrudeuse et avant séchage, un matériau composite extrudé renfermant 16,4 % en masse de polymère, 1,3 % en masse de particules de carbone et 65,1 % en masse de LiFePO$_4$. Le contenu des doseurs (2a), (2b) a été introduit successivement dans la bi-vis par gravité (1a et 1b). Le contenu du doseur 2c a été introduit dans la bivis *via* un gaveur latéral. De l'eau déminéralisée renfermant de 15 à 40 % en masse de LiTFSI a également été introduite au moyen de la pompe d'injection liquide (3) dans la bi-vis (1c), en une quantité suffisante pour obtenir, après mélange de l'ensemble des ingrédients dans la bi-vis de l'extrudeuse (1), un matériau composite extrudé renfermant de 8 à 16 % en masse d'eau. Le débit total à sec a été réglé à 100 kg/h, soit à un débit d'environ 108 à 119 kg/h en tenant compte de la masse d'eau injectée. L'extrusion a été réalisée à une température de 65°C avec une vitesse de rotation de la bi-vis de l'ordre de 180 tours/min. Le matériau composite résultant de l'extrusion a ensuite été repris par la monovis de reprise (4), à une vitesse de 24 tours/min et à la température 65°C, pour être acheminé jusqu'à la filière plate (5) avant l'étape finale de laminage (6) au cours de laquelle le mélange extrudé a été laminé sur un collecteur de courant constitué d'aluminium d'une épaisseur de 12 $\mu$m et revêtu d'une laque protectrice conductrice électronique de 2 $\mu$m d'épaisseur sur chaque face identique à celle décrite dans l'exemple 1 ci-dessus, à une vitesse de laminage de 35 m/min. Le film de matériau extrudé appliqué sur le collecteur de courant a ensuite été séché pour éliminer l'eau par passage en flottaison horizontale dans un tunnel de séchage (7) d'une longueur comprise entre 30 et 50 m, avec des vitesses d'air soufflé par les buses inférieures et supérieures de 30 à 60 m/s, en appliquant des températures de 60 à 180°C selon la position des zones.

On a ainsi obtenu une électrode positive, déposée directement sur un collecteur de courant, ladite électrode se présentant sous la forme d'un film fin de matériau composite ayant une épaisseur de 52 $\pm$ 2 $\mu$m (échantillon mesuré en laboratoire à l'aide d'un palpeur micrométrique de la marque MITUTOYO ®, une porosité inférieure à 2,5 %, une largeur de 380 $\pm$ 1,5 mm et une teneur en eau inférieure à 600 ppm.

Une mesure en ligne d'épaisseur qui effectue une référence 0 sur le système collecteur de courant afin d'apprécier l'épaisseur de la première face de cathode post séchage a confirmé l'épaisseur moyenne de 52 $\mu$m $\pm$ 2$\mu$m. La mesure d'épaisseur en ligne a été réalisée par un dispositif optique de type barrage LED Keyence ® de référence LS 7030 fonctionnant en « travelling » (baladage sens travers afin d'analyser la laize complète).

La porosité a été mesurée par la technique classique masse / volume permettant de déduire la densité vraie du produit ; des mesures réalisées sur un pycnomètre à hélium de la marque Micromeritics AccuPyc 1330 ont pu confirmer les faibles valeurs de porosité. Les mesures de densité réelle réalisées attestent du faible niveau de porosité du produit final. Des observations MEB de surface et dans la tranche ont permis de confirmer ces caractéristiques (non représentées). Il n'a pas été observé de pores en surface, ni de lacunes dans les échantillons examinés.

Un système de détection de défauts en ligne (caméra linéaire haute définition 4096 pixels AVIIVA ® réf. SM2 avec logiciel INCORE Systems ®) a permis également, tout au long de la production, de surveiller la qualité du film (absence de corps étrangers, griffures, pores...) et de contrôler en ligne la laize de la cathode et les débordements de collecteur. La valeur moyenne de 380 $\pm$ 1,5 mm est issue de ce système de mesure.

La deuxième face de cathode a été extrudée et processée selon les mêmes paramètres sur la face libre du précédent système {collecteur de courant / cathode première face}. On a ainsi obtenu un collecteur de courant revêtu d'un film d'électrode positive sur chaque face, ayant une épaisseur globale de 120 $\pm$ 4 $\mu$m (incluant chacune des faces de cathode, le collecteur de courant et ses couches de protection), une porosité inférieure à 1,5%, une largeur de 380 $\pm$ 1,5 mm et une teneur en eau inférieure à 500 ppm. Une mesure en ligne d'épaisseur qui effectue cette fois une référence 0 sur le premier système collecteur de courant / cathode afin d'apprécier l'épaisseur spécifique de la deuxième face de cathode post séchage a fourni une épaisseur statistique moyenne de 52 $\mu$m $\pm$ 2$\mu$m.

**Exemple 3 : Préparation d'une batterie au lithium**

Dans cet exemple, on a préparé une batterie au lithium contenant :

- l'électrode positive fabriquée dans l'exemple 2 précédent,

- un électrolyte constitué d'un film bicouche comme décrit dans la demande de brevet FR-A-2 881 275, c'est-à-dire un film constitué d'un premier film de 10 $\mu$m en contact avec la cathode et contenant, en masse, 38 % de polyoxyde d'éthylène (POE), 53 % de PVDF/HFP, 9 % de LiTFSI et d'un second film de 10 $\mu$m en contact avec le lithium contenant 70% de POE, 2,2 % de PVDF/HFP, 17,8% de LiTFSi et 10% de MgO.

- un film de lithium ayant une épaisseur de 70 $\mu$m comme électrode négative, et

- un collecteur de courant en aluminium.

L'assemblage de ces éléments a été réalisé par bobinage.

On a fait fonctionner la batterie avec un régime de C/2 à la décharge et un régime de C/4 à la charge, en imposant une tension comprise entre 3,6 V et 2,5 V aux bornes.

Les courbes tension = f(capacité) obtenues (non représentées) étaient normales et ne présentaient aucun défaut lié au procédé.

La durée de vie constatée a été de 1308 cycles (1a fin de vie correspond à une perte de 20 % de la capacité initiale de la batterie) ce qui est largement supérieur à l'objectif fixé qui était de 1000 cycles.

Il apparaît donc que l'utilisation du procédé de préparation de film d'électrode positive conforme à l'invention n'entraine pas de baisse de performances des batteries utilisant ce film.

**Revendications**

1. Procédé de préparation d'une électrode positive constituée d'un matériau composite comprenant les ingrédients suivants :

   - au moins un matériau actif d'électrode positive choisi parmi les matériaux à base de phosphate de fer,
   - au moins un polymère hydrosoluble et ayant des propriétés de conduction ionique en présence d'un sel de lithium,
   - au moins un sel de lithium ; et
   - éventuellement au moins un matériau conférant des propriétés de conduction électronique,

   ledit procédé comportant au moins une étape de mélange, par extrusion, des ingrédients du matériau composite pour obtenir un matériau composite extrudé, au moins une étape de mise en forme du matériau extrudé au travers d'une filière, au moins une étape de laminage ou de calandrage du matériau composite extrudé sous la forme d'un film d'électrode positive sur un collecteur de courant, et au moins une étape de séchage du film d'électrode positive appliqué sur le collecteur de courant,
   ledit procédé étant **caractérisé en ce que** l'étape d'extrusion est réalisée au moyen d'un comalaxeur, d'une extrudeuse bi-vis, ou d'une extrudeuse multivis, en présence d'un solvant aqueux constitué d'eau déminéralisée ou distillée ou d'un mélange d'eau déminéralisée ou distillée et d'au moins un solvant hydromiscible représentant au maximum 30 % en masse de la masse totale du solvant aqueux, ledit solvant aqueux représentant de 3 à 25 % environ en masse par rapport à la masse totale des ingrédients constituant le matériau composite, et à une température de 20 à 95°C, et **en ce que** le polymère hydrosoluble est choisi parmi les polymères, copolymères et terpolymères de polyoxyéthylène, polyoxypropylène et polyoxybutylène.

2. Procédé selon la revendication 1, **caractérisé en ce que** l'étape d'extrusion est conduite à une température de 35 à 80°C.

3. Procédé selon la revendication 1 ou 2, **caractérisé en ce que** l'étape d'extrusion est réalisée au moyen d'une extrudeuse bi-vis.

4. Procédé selon la revendication 3, **caractérisé en ce que** la bi-vis de l'extrudeuse est une bi-vis corotative.

5. Procédé selon la revendication 4, **caractérisé en ce que** l'extrudeuse bi-vis comporte un fourreau sectionnel, modulaire constitué d'une dizaine de blocs successifs, individuellement régulés à une température spécifique choisie et dans lesquels tournent deux vis parallèles, un moto-réducteur à vitesse variable entraînant les vis, un ou plusieurs dispositifs d'alimentation à débits variables destinés à alimenter l'extrudeuse avec les ingrédients entrant dans la composition du matériau composite d'électrode, un système d'introduction du solvant aqueux liquide, et éventuellement un ou plusieurs dispositifs de gavage latéral, ladite extrudeuse bivis étant en outre munie de différents puits d'alimentation, d'un ou de plusieurs ensembles fourreaux spécifiques dédiés à la connexion éventuelle de la ou des buses d'injection liquide, et éventuellement d'un ou de plusieurs ensembles fourreaux destinées à accueillir la ou les connexions d'un gaveur latéral.

6. Procédé selon l'une quelconque des revendications précédentes, **caractérisé en ce que** le solvant hydromiscible est choisi parmi le méthanol, l'éthanol, le propanol, le butanol et les glycols.

7. Procédé selon l'une quelconque des revendications précédentes, **caractérisé en ce que** lorsqu'il est présent, le solvant hydromiscible représente moins de 15 % en masse par rapport à la masse totale du solvant aqueux.

8. Procédé selon l'une quelconque des revendications précédentes, **caractérisé en ce que** la quantité de solvant aqueux utilisée pendant l'étape d'extrusion varie de 8 à 15 % en masse par rapport à la masse totale des ingrédients constituant le matériau composite.

9. Procédé selon l'une quelconque des revendications précédentes, **caractérisé en ce qu'**un dispositif de montée et de stabilisation de la pression est positionné en sortie de l'extrudeuse, avant la filière.

10. Procédé selon la revendication 9, **caractérisé en ce que** ledit dispositif est une extrudeuse monovis de reprise ayant un profil de température de 20 à 95°C.

**11.** Procédé selon l'une quelconque des revendications précédentes, **caractérisé en ce que** la filière est une filière plate.

**12.** Procédé selon l'une quelconque des revendications précédentes, **caractérisé en ce que** l'étape de laminage ou de calandrage est réalisée à l'aide d'un équipement de laminage ou de calandrage constitué de 2 cylindres tournant en sens inverse.

**13.** Procédé selon l'une quelconque des revendications précédentes, **caractérisé en ce que** l'étape de séchage est effectuée en ligne.

**14.** Procédé selon l'une quelconque des revendications précédentes, **caractérisé en ce que** le matériau actif d'électrode positive, le polymère hydrosoluble et le matériau conférant des propriétés de conduction électronique sont chacun contenus dans des doseurs différents et introduits successivement et/ou simultanément dans les différentes zones choisies de l'extrudeuse, en aval ou en amont de la zone d'introduction du solvant aqueux.

**15.** Procédé selon l'une quelconque des revendications précédentes, **caractérisé en ce que** le solvant aqueux est injecté directement dans l'extrudeuse, au moyen d'une pompe d'injection liquide.

**16.** Procédé selon l'une quelconque des revendications précédentes, **caractérisé en ce que** l'extrusion est réalisée à un débit de 2 à 200 kg du mélange des ingrédients (matières sèches) entrant la composition du matériau d'électrode par heure.

**17.** Procédé selon l'une quelconque des revendications précédentes, **caractérisé en ce que** le matériau actif d'électrode est du $LiFePO_4$ se présentant sous la forme de particules nues ou comportant un revêtement carboné.

**18.** Procédé selon l'une quelconque des revendications précédentes, **caractérisé en ce que** le matériau actif d'électrode représente de 60 à 85 % en masse de la masse totale des ingrédients entrant dans la composition du matériau composite à l'état sec.

**19.** Procédé selon l'une quelconque des revendications précédentes, **caractérisé en ce que** polymère hydrosoluble se présente sous la forme de poudre, de granulés ou d'une dispersion aqueuse.

**20.** Procédé selon l'une quelconque des revendications précédentes, **caractérisé en ce que** le polymère hydrosoluble représente de 10 à 30 % en masse par rapport à la masse totale des ingrédients entrant dans la composition du matériau composite à l'état sec.

**21.** Procédé selon l'une quelconque des revendications précédentes, **caractérisé en ce que** le matériau conférant des propriétés de conduction électronique est du carbone et est choisi parmi les noirs de carbone, les nanotubes de carbone, le graphite, ou des mélanges de ces matériaux.

**22.** Procédé selon l'une quelconque des revendications 1 à 20, **caractérisé en ce que** le matériau conférant des propriétés de conduction électronique est une dispersion aqueuse de noir de carbone ou de graphite.

**23.** Procédé selon l'une quelconque des revendications précédentes, **caractérisé en ce que** le matériau composite d'électrode positive renferme un sel de lithium choisi parmi $LiAlCl_4$, $Li_2Al_2Cl_6O$, $LiClO_4$, $LiPF_6$, $LiAsF_6$, $LiBF_4$, $LiCF_3SO_3$, $LiSbF_6$, $LiSbCl_6$, $Li_2TiCl_6$, $Li_2SeCl_6$, $Li_2B_{10}Cl_{10}$, $Li_2B_{12}Cl_{12}$, LiBOB, LiBETI, LiFSI, et LiTFSI.

**24.** Procédé selon la revendication 23, **caractérisé en ce que** la teneur finale en sel de lithium varie de 3 à 10 % en masse, par rapport à la masse totale du matériau composite d'électrode après séchage du film.

**25.** Procédé selon la revendication 23 ou 24, **caractérisé en ce que** le sel de lithium est ajouté aux ingrédients entrant dans la composition du matériau composite de l'électrode lors de l'étape d'extrusion et est choisi parmi LiTFSI, $LiClO_4$ et LiBETI.

**26.** Procédé selon l'une quelconque des revendications 23 à 25, **caractérisé en ce que** le solvant aqueux renferme utilisé lors de l'étape d'extrusion renferme ledit sel de lithium en solution.

**27.** Procédé selon l'une quelconque des revendications précédentes, **caractérisé en ce que** l'étape de laminage ou de calandrage est effectuée directement sur une au moins des deux faces d'un collecteur de courant, par application du matériau composite extrudé en sortie de la filière.

28. Procédé selon l'une quelconque des revendications précédentes, **caractérisé en ce que** collecteur de courant pour l'électrode positive est constitué d'une feuille d'aluminium d'une épaisseur allant de 4 μm à 30 μm.

29. Procédé selon l'une quelconque des revendications précédentes, **caractérisé en ce que** l'étape de séchage du film appliqué sur le collecteur de courant est effectué par convexion dans un four de séchage intégrant la technique d'auto-sustentation.

30. Electrode positive obtenue par la mise en oeuvre du procédé tel que défini à l'une quelconque des revendications précédentes, **caractérisée en ce qu'**elle se présente sous la forme d'un film d'un matériau composite dans lequel le matériau actif d'électrode est un matériau à base de phosphate de fer, et **en ce que** :

- la teneur en matériau actif d'électrode est supérieure à 60 %, en masse par rapport à la masse totale de l'électrode à l'état sec,
- son épaisseur est inférieure à 100 μm,
- sa porosité est inférieure à 3 %,
- sa teneur en eau est inférieure à 1000 ppm.

31. Electrode selon la revendication 30, **caractérisée en ce que** sa porosité est inférieure à 1 %.

32. Electrode selon la revendication 30 ou 31, **caractérisé en ce que** sa largeur varie du centimètre jusqu'à des valeurs supérieures à 700 mm.

33. Utilisation d'une électrode positive telle définie à l'une quelconque des revendications 30 à 32, pour la fabrication d'une batterie au lithium.

34. Batterie au lithium comportant au moins une électrode positive, une électrode négative, un électrolyte et un collecteur de courant, **caractérisée en ce que** l'électrode positive est une électrode telle que définie à l'une quelconque des revendications 30 à 32.

**Patentansprüche**

1. Verfahren zur Herstellung einer positiven Elektrode, gebildet von einem Verbundmaterial, umfassend die folgenden Zutaten:

- mindestens ein aktives Material einer positiven Elektrode, ausgewählt aus den Materialien auf der Basis von Eisenphosphat,
- mindestens ein wasserlösliches Polymer mit lonenleiteigenschaften bei Anwesenheit eines Lithiumsalzes,
- mindestens ein Lithiumsalz, und
- eventuell mindestens ein Material, das Eigenschaften elektronischer Leitung verleiht,

wobei das Verfahren mindestens einen Mischschritt, durch Extrusion, der Zutaten des Verbundmaterials, um ein extrudiertes Verbundmaterial zu erhalten, mindestens einen Formungsschritt des extrudierten Materials anhand einer Formvorrichtung, mindestens einen Laminierungs- oder Kalanderschritt des extrudierten Verbundmaterials in Form eines Films einer positiven Elektrode auf einem Stromsammler und mindestens einen Trocknungsschritt des Films einer positiven Elektrode, aufgebracht auf dem Stromsammler, aufweist, wobei das Verfahren **dadurch gekennzeichnet ist, dass** der Extrusionsschritt mit Hilfe eines Comischers, eines Doppelschnecken-Extruders oder eines Multischnecken-Extruders durchgeführt wird, bei Anwesenheit eines wässrigen Lösungsmittels, gebildet von demineralisiertem oder destilliertem Wasser oder einem Gemisch demineralisierten oder destillierten Wassers und mindestens eines wassermischbaren Lösungsmittels, das maximal 30 Ma% der Gesamtmasse des wässrigen Lösungsmittels darstellt, wobei das wässrige Lösungsmittel zirka 3 bis 25 Ma% in Bezug zur Gesamtmasse der Zutaten darstellt, die das Verbundmaterial bilden, und bei einer Temperatur von 20 bis 95 °C, und dass das wasserlösliche Polymer aus den Polymeren, Copolymeren und Terpolymeren von Polyoxyethylen, Polyoxypropylen und Polyoxybutylen ausgewählt ist.

2. Verfahren nach Anspruch 1, **dadurch gekennzeichnet, dass** der Extrusionsschritt bei einer Temperatur von 35 bis 80 °C durchgeführt ist.

3. Verfahren nach Anspruch 1 oder 2, **dadurch gekennzeichnet, dass** der Extrusionsschritt mit Hilfe eines Doppelschnecken-Extruders durchgeführt wird.

4. Verfahren nach Anspruch 3, **dadurch gekennzeichnet, dass** die Doppelschnecke des Extruders eine korotative Doppelschnecke ist.

5. Verfahren nach Anspruch 4, **dadurch gekennzeichnet, dass** der Doppelschrauben-Extruder eine modulare, sektionale Hülse, gebildet von einem Dutzend aufeinanderfolgender Blöcke, individuell eingestellt auf eine ausgewählte spezifische Temperatur, und in denen zwei parallele Schnecken drehen, einen Getriebemotor mit variabler Geschwindigkeit, der die Schnecken antreibt, eine oder mehrere Versorgungsvorrichtungen mit variablen Förderleistungen, die bestimmt sind, den Extruder mit den Zutaten zu versorgen, die in die Zusammensetzung des Elektrodenverbundmaterials eingehen, ein System zum Einleiten des flüssigen wässrigen Lösungsmittels und eventuell eine oder mehrere Seitenzufuhrvorrichtungen aufweist, wobei der Doppelschnecken-Extruder ferner mit verschiedenen Versorgungsschächten, einer oder mehreren speziellen Hülseneinheiten für den eventuellen Anschluss der Flüssigkeitseinspritzdüse(n) und eventuell einer oder mehreren Hülseneinheiten zur Aufnahme der Verbindung(en) eines seitlichen Zuführers ausgestattet ist.

6. Verfahren nach einem der vorangehenden Ansprüche, **dadurch gekennzeichnet, dass** das wassermischbare Lösungsmittel aus dem Methanol, dem Ethanol, dem Propanol, dem Butanol und den Glycolen ausgewählt ist.

7. Verfahren nach einem der vorangehenden Ansprüche, **dadurch gekennzeichnet, dass**, wenn es vorhanden ist, das wassermischbare Lösungsmittel unter 15 Ma% in Bezug zur Gesamtmasse des wässrigen Lösungsmittels darstellt.

8. Verfahren nach einem der vorangehenden Ansprüche, **dadurch gekennzeichnet, dass** die Menge wässrigen Lösungsmittels, die während des Extrusionsschritts verwendet wird, von 8 bis 15 Ma% in Bezug zur Gesamtmasse der Zutaten schwankt, die das Verbundmaterial bilden.

9. Verfahren nach einem der vorangehenden Ansprüche, **dadurch gekennzeichnet, dass** eine Druckanstiegs- und Stabilisierungsvorrichtung vor der Formvorrichtung am Ausgang des Extruders positioniert ist.

10. Verfahren nach Anspruch 9, **dadurch gekennzeichnet, dass** die Vorrichtung ein Einzelschnecken-Wiederaufnahmeextruder ist mit einem Temperaturprofil von 20 bis 95 °C.

11. Verfahren nach einem der vorangehenden Ansprüche, **dadurch gekennzeichnet, dass** die Formvorrichtung eine flache Formvorrichtung ist.

12. Verfahren nach einem der vorangehenden Ansprüche, **dadurch gekennzeichnet, dass** der Laminierungs- oder Kalanderschritt mit Hilfe einer Laminierungs- oder Kalanderausrüstung durchgeführt wird, die von zwei Zylindern gebildet ist, die gegenläufig drehen.

13. Verfahren nach einem der vorangehenden Ansprüche, **dadurch gekennzeichnet, dass** der Trocknungsschritt inline durchgeführt wird.

14. Verfahren nach einem der vorangehenden Ansprüche, **dadurch gekennzeichnet, dass** das aktive Material der positiven Elektrode, das wasserlösliche Polymer und das Material, das Eigenschaften elektronischer Leitung verleiht, jeweils in unterschiedlichen Dosierern enthalten sind und nacheinander und/oder gleichzeitig in die ausgewählten unterschiedlichen Zonen des Extruders nach oder vor der Einleitungszone des wässrigen Lösungsmittels eingeleitet werden.

15. Verfahren nach einem der vorangehenden Ansprüche, **dadurch gekennzeichnet, dass** das wässrige Lösungsmittel direkt in den Extruder mittels einer Flüssigkeitsinjektionspumpe injiziert wird.

16. Verfahren nach einem der vorangehenden Ansprüche, **dadurch gekennzeichnet, dass** die Extrusion in einer Menge von 2 bis 200 kg des Gemischs der Zutaten (trockenes Material) erfolgt, die in die Zusammensetzung des Elektrodenmaterial pro Stunde eingehen.

**17.** Verfahren nach einem der vorangehenden Ansprüche, **dadurch gekennzeichnet, dass** das aktive Elektodenmaterial LiFePO$_4$ in Form von freiliegenden Partikeln oder mit kohlenstoffhaltiger Beschichtung vorliegt.

**18.** Verfahren nach einem der vorangehenden Ansprüche, **dadurch gekennzeichnet, dass** das aktive Elektodenmaterial 60 bis 85 Ma% der Gesamtmasse der Zutaten darstellt, die in die Zusammensetzung des Verbundmaterials in trockenem Zustand eingehen.

**19.** Verfahren nach einem der vorangehenden Ansprüche, **dadurch gekennzeichnet, dass** das wasserlösliche Polymer in Form von Pulver, Granulat oder einer wässrigen Dispersion vorliegt.

**20.** Verfahren nach einem der vorangehenden Ansprüche, **dadurch gekennzeichnet, dass** das wasserlösliche Polymer 10 bis 30 Ma% in Bezug zur Gesamtmasse der Zutaten darstellt, die die in die Zusammensetzung des Verbundmaterials in trockenem Zustand eingehen.

**21.** Verfahren nach einem der vorangehenden Ansprüche, **dadurch gekennzeichnet, dass** das Material, das Eigenschaften elektronischer Leitung verleiht, Carbon ist und aus den Carbonschwarzen, den Carbonnanoröhren, dem Graphit oder den Gemischen dieser Materialien ausgewählt ist.

**22.** Verfahren nach einem der Ansprüche 1 bis 20, **dadurch gekennzeichnet, dass** das Material, das Eigenschaften elektronischer Leitung verleiht, eine wässrige Dispersion von Carbonschwarz oder von Graphit ist.

**23.** Verfahren nach einem der vorangehenden Ansprüche, **dadurch gekennzeichnet, dass** das Verbundmaterial der positiven Elektrode ein Lithiumsalz einschließt, das aus LiAlCl$_4$, Li$_2$Al$_2$Cl$_6$O, LiClO$_4$, LiPF$_6$, LiAsF$_6$, LiBF$_4$, LiCF$_3$SO$_3$, LiSbF$_6$, LiSbClg, Li$_2$TiCl$_6$, Li$_2$SeCl$_6$, Li$_2$B$_{10}$Cl$_{10}$, Li$_2$B$_{12}$Cl$_{12}$, LiBOB, LiBETI, LiFSI und LiTFSI ausgewählt ist.

**24.** Verfahren nach Anspruch 23, **dadurch gekennzeichnet, dass** der abschließende Gehalt an Lithiumsalz von 3 bis 10 Ma% in Bezug zur Gesamtmasse des Verbundmaterials der Elektrode nach Trocknung des Films schwankt.

**25.** Verfahren nach Anspruch 23 oder 24, **dadurch gekennzeichnet, dass** das Lithiumsalz den Zutaten hinzugefügt wird, die in die Zusammensetzung des Verbundmaterials der Elektrode beim Extrusionsschritt eingehen und aus LiTFSI, LiClO$_4$ und LiBETI ausgewählt ist.

**26.** Verfahren nach einem der Ansprüche 23 bis 25, **dadurch gekennzeichnet, dass** das beim Extrusionsschritt verwendete wässrige Lösungsmittel das gelöste Lithiumsalz einschließt.

**27.** Verfahren nach einem der vorangehenden Ansprüche, **dadurch gekennzeichnet, dass** der Laminierungs- oder Kalanderschritt direkt auf mindestens einer der zwei Seiten eines Stromsammlers durch Aufbringen des am Ausgang der Formvorrichtung extrudierten Verbundmaterials durchgeführt wird.

**28.** Verfahren nach einem der vorangehenden Ansprüche, **dadurch gekennzeichnet, dass** der Stromsammler für die positive Elektrode von einer Aluminiumfolie mit einer Stärke von 4 $\mu$m bis 30 $\mu$m gebildet ist.

**29.** Verfahren nach einem der vorangehenden Ansprüche, **dadurch gekennzeichnet, dass** der Trocknungsschritt des auf den Stromsammler aufgebrachten Films durch Konvektion in einem Trocknungsofen durchgeführt, der die Selbstschwebetechnik integriert.

**30.** Positive Elektrode, erhalten durch die Umsetzung des Verfahrens nach einem der vorangehenden Ansprüche, **dadurch gekennzeichnet, dass** sie in Form eines Films eines Verbundmaterials vorliegt, wobei das aktive Elektrodenmaterial ein Material auf der Basis von Eisenphosphat ist, und dass:

- der Gehalt an aktivem Elektrodenmaterial über 60 Ma% in Bezug zur Gesamtmasse der Elektrode in trockenem Zustand beträgt,
- ihre Stärke unter 100 $\mu$m beträgt,
- ihre Porosität unter 3 % beträgt,
- ihr Wassergehalt unter 1000 ppm beträgt.

**31.** Elektrode nach Anspruch 30, **dadurch gekennzeichnet, dass** ihre Porosität unter 1 % beträgt.

**32.** Elektrode nach Anspruch 30 oder 31, **dadurch gekennzeichnet, dass** ihre Breite vom Zentimeter bis zu Werten über 700 mm schwankt.

**33.** Verwendung einer positiven Elektrode nach einem der Ansprüche 30 bis 32 zur Herstellung einer Lithiumbatterie.

**34.** Lithiumbatterie, aufweisend mindestens eine positive Elektrode, eine negative Elektrode, ein Elektrolyt und einen Stromsammler, **dadurch gekennzeichnet, dass** die positive Elektrode eine Elektrode nach einem der Ansprüche 30 bis 32 ist.

**Claims**

**1.** Method for preparing a positive electrode made of a composite material comprising the following ingredients:

- at least one positive electrode active material chosen from among iron phosphate-based materials,
- at least one water-soluble polymer having ionic conduction properties in the presence of a lithium salt,
- at least one lithium salt; and
- optionally at least one material conferring electronic conduction properties,

wherein the method comprises at least one step of mixing, by extrusion, the ingredients of the composite material in order to obtain an extruded composite material, at least one step of shaping the extruded material through a die, at least one step for rolling or calendering the extruded composite material in the form of a positive electrode film on a current collector, and at least one step of drying the positive electrode film applied to the current collector, wherein the method is **characterized in that** the extrusion step is carried out by means of a mixer, a twin-screw extruder, or a multi-screw extruder, in the presence of an aqueous solvent consisting of demineralized or distilled water or a mixture of demineralized or distilled water, and at least one hydromiscible solvent representing at most 30% by weight of the total mass of the aqueous solvent, wherein the aqueous solvent represents from 3 to 25% by weight relative to the total mass of the ingredients constituting the composite material, and at a temperature of 20 to 95°C, and **in that** the water-soluble polymer is selected from among polymers, copolymers and terpolymers of polyoxyethylene, polyoxypropylene and polyoxybutylene.

**2.** Method according to claim 1, **characterized in that** the extrusion step is performed at a temperature of 35 to 80°C.

**3.** Method according to claim 1 or 2, **characterized in that** the extrusion step is performed by means of a twin-screw extruder.

**4.** Method according to claim 3, **characterized in that** the twin screw of the extruder is a co rotating twin screw.

**5.** Method according to claim 4, **characterized in that** the twin-screw extruder comprises a modular sectional sheath that consists of ten successive blocks that are individually controlled at a selected specific temperature and in which two parallel screws rotate, wherein a variable speed gear motor drives the screws, one or more variable flow feeders feed the extruder with the ingredients of the composition of the electrode composite material, wherein a system for introducing liquid aqueous solvent, and optionally one or more lateral feeding devices, wherein the twin-screw extruder is further provided with different supply wells, one or more hose assemblies specifically dedicated to the possible connection of the liquid injection nozzle(s), and possibly one or more sets of ducts for receiving the connection(s) of a side feeder.

**6.** Method according to any one of the preceding claims, **characterized in that** the hydromiscible solvent is selected from among methanol, ethanol, propanol, butanol and glycols.

**7.** Method according to any one of the preceding claims, **characterized in that** when present, the hydromiscible solvent is less than 15% by weight relative to the total mass of the aqueous solvent.

**8.** Method according to any one of the preceding claims, **characterized in that** the amount of aqueous solvent used during the extrusion step varies from 8 to 15% by weight relative to the total weight of the ingredients constituting the composite material.

9. Method according to any one of the preceding claims, **characterized in that** a device for increasing and stabilizing the pressure is positioned at the output of the extruder before the die.

10. Method according to claim 9, **characterized in that** the device is a single screw re-extruder having a temperature profile of 20 to 95°C.

11. Method according to any one of the preceding claims, **characterized in that** the die is a flat die.

12. Method according to any one of the preceding claims, **characterized in that** the rolling or calendering step is performed using rolling or calendering equipment consisting of two cylinders rotating in opposite directions.

13. Method according to any one of the preceding claims, **characterized in that** the drying step is performed online.

14. Method according to any one of the preceding claims, **characterized in that** the positive electrode active material, the water-soluble polymer and the material conferring electronic conduction properties, are each contained in different feeders and introduced successively and/or simultaneously into the different selected zones of the extruder, downstream or upstream of the zone for introducing the aqueous solvent.

15. Method according to any one of the preceding claims, **characterized in that** the aqueous solvent is injected directly into the extruder by means of a liquid injection pump.

16. Method according to any one of the preceding claims, **characterized in that** the extrusion is carried out at a rate of 2 to 200 kg of the mixture of ingredients (dry matter) entering the composition of the electrode material per hour.

17. Method according to any one of the preceding claims, **characterized in that** the electrode active material is $LiFePO_4$ in the form of naked particles or having a carbon coating.

18. Method according to any one of the preceding claims, **characterized in that** the electrode active material represents from 60 to 85% by weight of the total mass of the ingredients used in the composition of the composite material in the dry state.

19. Method according to any one of the preceding claims, **characterized in that** the water-soluble polymer is in the form of powder, granules or an aqueous dispersion.

20. Method according to any one of the preceding claims, **characterized in that** the water-soluble polymer represents from 1 to 30% by weight relative to the total mass of the ingredients used in the composition of the composite material in the dry state.

21. Method according to any one of the preceding claims, **characterized in that** the material conferring electronic conduction properties is carbon, and is selected from among carbon blacks, carbon nanotubes, graphite, or mixtures of these materials.

22. Method according to any one of claims 1 to 20, **characterized in that** the material conferring electronic conduction properties is an aqueous dispersion of carbon black or graphite.

23. Method according to any one of the preceding claims, **characterized in that** the positive electrode composite material contains a lithium salt selected from among $LiAlCl_4$, $Li_2Al_2Cl_6O$, $LiClO_4$, $LiPF_6$, $LiAsF_6$, $LiBF_4$, $LiCF_3SO_3$, $LiSbF_6$, $LiSbCl_6$, $Li_2TiCl_6$, $Li_2SeCl_6$, $Li_2B_{10}Cl_{10}$, $Li_2B_{12}Cl_{12}$, LiBOB, LiBETI, LiFSI, and LiTFSI.

24. Method according to claim 23, **characterized in that** the final lithium salt content varies from 3 to 10% by weight, relative to the total mass of the electrode composite material after drying of the film.

25. Method according to claim 23 or 24, **characterized in that** the lithium salt is added to the ingredients used in the composition of the composite material of the electrode during the extrusion step and is selected from among LiTFSI, $LiClO_4$ and LiBETI.

26. Method according to any one of the claims 23 to 25, **characterized in that** the aqueous solvent used during the extrusion stage contains the lithium salt in solution.

27. Method according to any one of the preceding claims, **characterized in that** the rolling or calendering step is performed directly on at least one of the two faces of a current collector by applying the extruded composite material at the output of the sector.

28. Method according to any one of the preceding claims, **characterized in that** the current collector for the positive electrode consists of an aluminum foil with a thickness ranging from 4 $\mu$m to 30 $\mu$m.

29. Method according to any one of the preceding claims, **characterized in that** the step of drying the film applied to the current collector is carried out by convection in a drying oven incorporating the self-sustaining technique.

30. Positive electrode obtained by the implementation of the method as defined in any one of the preceding claims, **characterized in that** it is in the form of a film of a composite material wherein the active electrode material is a material based on iron phosphate, and wherein:

- the electrode active material content is greater than 60% by weight relative to the total weight of the electrode in the dry state,
- its thickness is less than 100 $\mu$m,
- its porosity is less than 3%,
- its water content is less than 1000 ppm.

31. Electrode according to claim 30, **characterized in that** its porosity is less than 1%.

32. Electrode according to claim 30 or 31, **characterized in that** its width varies from a centimeter up to values greater than 700 mm.

33. Use of a positive electrode as defined in any one of the claims 30 to 32 for the manufacture of a lithium battery.

34. Lithium battery comprising at least one positive electrode, a negative electrode, an electrolyte and a current collector, **characterized in that** the positive electrode is an electrode as defined in any one of the claims 30 to 32.

# FIGURE 1

# FIGURE 2

40 µm

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004045007 A
- US 2006166093 A
- FR 2881275 A